# EUROPEAN PATENT APPLICATION

(11) **EP 4 765 298 A1**
(43) Date of publication of application: **24.06.2026**
(21) Application number: 25207477.8
(22) Date of filing: 08.10.2025
(51) Int. Cl.: H01M 10/0585, H01M 50/528, H01M 50/54

(54) **SECONDARY BATTERY AND BATTERY PACK INCLUDING SECONDARY BATTERY**

(30) Priority: 18.12.2024 KR 20240190081
(71) Applicant: SAMSUNG SDI CO., LTD., Yongin-si, Gyeonggi-do 17084 (KR)
(72) Inventor: Guen, Min Hyung, 16678 Gyeonggi-do, Suwon-si (KR)
(74) Representative: Meissner Bolte Partnerschaft mbB

(57) **Abstract**

The present invention relates to a secondary battery and a battery pack including the secondary battery. The secondary battery includes: a case having one open side, the case including a plurality of walls defining an internal space; an electrode assembly accommodated in the internal space; a cap plate configured to close the one open side of the case; a first terminal disposed on the cap plate; a first plate disposed between one of the plurality of walls and the electrode assembly in the internal space, the first plate including a first current collector connecting portion; and a first current collector including a first terminal connecting portion and a first plate connecting portion, the first terminal connecting portion electrically coupled to the first terminal, the first plate connecting portion electrically connected to the first terminal connecting portion and including a first welding surface facing away from the one of the plurality of walls, the first welding surface welded to the first current collector connecting portion.

## Description

### BACKGROUND

### 1. Field of the Invention

The present invention relates to a secondary battery and a battery pack including the secondary battery.

### 2. Discussion of Related Prior Art

A lithium secondary battery includes a positive electrode and a negative electrode, any one of which including active materials capable of intercalating and deintercalating lithium ions, and an electrolyte, and produces electrical energy through oxidation and reduction reactions when lithium ions are intercalated/deintercalated into/from the positive electrode and negative electrode.

There is a need for developing structural methods for suppressing thermal runaway due to a risk of explosion and fire caused by thermal runaway, which occurs when the interior of the lithium secondary battery rapidly heats up and explodes.

This Background section is for the general understanding of the background of the present invention, and therefore, it may contain information that does not constitute related (or prior) art.

### SUMMARY

The present invention is directed to a secondary battery that prevents thermal runaway that may happen in the interior of the secondary battery due to an external impact. The present invention is directed to a battery pack including the secondary battery.

The present invention concerns a secondary battery including: a case having one open side and a plurality of walls defining an internal space; an electrode assembly accommodated in the internal space; a cap plate which closes the one, in particular open, side of the case; a first terminal disposed, in particular installed, on the cap plate; a first plate located between one of the plurality of walls and the electrode assembly in the internal space and having a first current collector connecting portion; and a first current collector including a first terminal connecting portion that is electrically coupled to the first terminal, and a first plate connecting portion that is connected to the first terminal connecting portion and has a first welding surface facing away from the one wall and welded to the first current collector connecting portion.

In some embodiments, the first plate connecting portion may further include a first stopper surface that blocks the first current collector connecting portion and intersects the first welding surface.

In some embodiments, the first plate connecting portion may further include a first thick portion that has the first stopper surface and is thicker than the first current collector connecting portion and a first thin portion that has the first welding surface and is thinner than the first thick portion.

In some embodiments, the first plate connecting portion further includes: a first thick portion including the first stopper surface, the first thick portion having a thickness greater than a thickness of the first current collector connecting portion; and a first thin portion including the first welding surface, the first thin portion having a thickness less than the thickness of the first thick portion.

In some embodiments, the first plate connecting portion may further include a first end thick portion that is spaced apart from the first thick portion, is bent at the first thin portion, and protrudes toward the one wall.

In some embodiments, the first plate connecting portion further includes a first end thick portion spaced apart from the first thick portion, the first end thick portion being bent at the first thin portion, the first end thick portion protruding toward the one of the plurality of walls.

In some embodiments, the first plate connecting portion may further include a first through hole passing through the first thin portion in a width direction of the first plate connecting portion.

In some embodiments, the first plate connecting portion further includes a first through hole passing through the first thin portion in a lateral direction of the first plate connecting portion.

In some embodiments, the first plate may further include a first tab connecting portion electrically connected to a first tab member provided on one side of the electrode assembly and a first stepped portion connecting the first tab connecting portion and the first current collector connecting portion in a stepped manner.

In some embodiments, the first plate further includes: a first tab connecting portion electrically connected to a first tab member disposed on one side of the electrode assembly; and a first stepped portion connecting the first tab connecting portion and the first current collector connecting portion in a stepwise configuration.

In some embodiments, the first plate may further include a first bending induction notch recessed in the first tab connecting portion so that a thickness is thinner than a surrounding region and extending in a width direction of the first plate.

In some embodiments, the first plate further includes a first bending induction notch recessed in the first tab connecting portion so that a thickness of the first bending induction notch is less than a thickness of a surrounding region, the first bending induction notch extending in a lateral direction of the first plate.

In some embodiments, the first bending induction notch may be formed in a region of the first tab connecting portion that does not overlap a first tab of the electrode assembly.

In some embodiments, the first bending induction notch is disposed in a region of the first tab connecting portion that does not overlap a first tab of the electrode assembly.

In some embodiments, the first terminal may be installed on one side of the cap plate, and the secondary battery may include a second terminal installed on the other side of the cap plate; a second plate located between the electrode assembly and the other of the plurality of walls facing the one wall in the internal space, and having a second current collector connecting portion on one side thereof; and a second current collector including a second terminal connecting portion that is electrically coupled to the second terminal and a second plate connecting portion that is connected to the second terminal connecting portion and has a second welding surface facing away from the other wall and welded to the second current collector connecting portion.

In some embodiments, the first terminal is disposed on one side of the cap plate, and wherein the secondary battery further includes: a second terminal disposed on the other side of the cap plate; a second plate disposed between the electrode assembly and an other of the plurality of walls facing the one of the plurality of walls in the internal space, the second plate including a second current collector connecting portion; and a second current collector including a second terminal connecting portion and a second plate connecting portion, the second terminal connecting portion electrically coupled to the second terminal, the second plate connecting portion electrically connected to the second terminal connecting portion and including a second welding surface facing away from the other of the plurality of walls welded to the second current collector connecting portion.

In some embodiments, the second plate connecting portion may further include a second stopper surface that blocks the second current collector connecting portion and intersects the second welding surface.

In some embodiments, the second plate connecting portion may further include a second thick portion that has the second stopper surface and is thicker than the second current collector connecting portion and a second thin portion that has the second welding surface and is thinner than the second thick portion.

In some embodiments, the second plate connecting portion further includes: a second thick portion including the second stopper surface, the second thick portion having a thickness greater than a thickness of the second current collector connecting portion; and a second thin portion including the second welding surface, the second thin portion having a thickness less than the thickness of the second thick portion.

In some embodiments, the second thin portion may be cut when an external force is applied to the second plate connecting portion.

In some embodiments, the second thin portion is configured to be cut upon an external force being applied to the second plate connecting portion.

In some embodiments, the second plate connecting portion may further include a second end thick portion that is spaced apart from the second thick portion, is bent at the second thin portion, and protrudes toward the other wall.

In some embodiments, the second plate connecting portion further comprises a second end thick portion spaced apart from the second thick portion, the second end thick portion being bent at the second thin portion, the second end thick portion protruding toward the other of the plurality of walls.

In some embodiments, the second plate connecting portion may further include a second through hole passing through the second thin portion in a width direction of the second plate connecting portion.

In some embodiments, the second plate connecting portion further comprises a second through hole passing through the second thin portion in a lateral direction of the second plate connecting portion.

In some embodiments, the second plate may further include a second tab connecting portion electrically connected to a second tab member provided on the other side of the electrode assembly, and a second stepped portion connecting the second tab connecting portion and the second current collector connecting portion in a stepped manner.

In some embodiments, the second plate further includes: a second tab connecting portion electrically connected to a second tab member disposed on the other side of the electrode assembly; and a second stepped portion connecting the second tab connecting portion and the second current collector connecting portion in a stepwise configuration.

In some embodiments, the second plate may further include a second bending induction notch recessed in the second tab connecting portion so that a thickness is thinner than a surrounding region and extending in a width direction of the second plate.

In some embodiments, the second plate further includes a second bending induction notch recessed in the second tab connecting portion so that a thickness of the second bending induction notch is less than a thickness of a surrounding region, the second bending induction notch extending in a lateral direction of the second plate.

In some embodiments, the second bending induction notch may be formed in a region of the second tab connecting portion that does not overlap a second tab of the electrode assembly.

In some embodiments, the second bending induction notch is disposed in a region of the second tab connecting portion that does not overlap a second tab of the electrode assembly.

According to another aspect the invention concerns a battery pack including: a housing; and a plurality of secondary batteries disposed inside the housing, wherein each of the secondary batteries includes: a case having one open side, the case including a plurality of walls defining an internal space; an electrode assembly accommodated in the internal space; a cap plate configured to close the one open side of the case; a first terminal disposed on the cap plate; a first plate disposed between one of the plurality of walls and the electrode assembly in the internal space, the first plate including a first current collector connecting portion; and a first current collector including a first terminal connecting portion and a first plate connecting portion, the first terminal connecting portion electrically coupled to the first terminal, the first plate connecting portion electrically connected to the first terminal connecting portion and including a first welding surface facing away from the one of the plurality of walls, the first welding surface welded to the first current collector connecting portion.

Further, a battery pack is described, including: a housing; and a plurality of secondary batteries disposed inside the housing, wherein each of the secondary batteries includes: a case having one open side and a plurality of walls defining an internal space; an electrode assembly accommodated in the internal space; a cap plate which closes the one side of the case; a first terminal installed on the cap plate; a first plate located between one of the plurality of walls and the electrode assembly in the internal space and having a first current collector connecting portion; and a first current collector including a first terminal connecting portion that is electrically coupled to the first terminal and the first plate connecting portion that is connected to the first terminal connecting portion and has a first welding surface facing away from the one wall and welded to the first current collector connecting portion.

### BRIEF DESCRIPTION OF THE DRAWINGS

The drawings illustrate embodiments of the present invention, and further describe aspects and features of the present invention along with the detailed description of the present invention. Thus, the present invention should not be construed as being limited to the drawings:
FIG. 1 is a perspective view schematically illustrating a battery pack according to embodiments of the present invention;
FIG. 2 is a perspective view schematically illustrating a secondary battery according to embodiments of the present invention;
FIG. 3 is an exploded perspective view schematically illustrating the secondary battery according to embodiments of the present invention;
FIG. 4 is a cross-sectional view taken along line S1-S1 in FIG. 2 according to embodiments of the present invention;
FIG. 5 is a view schematically illustrating an electrode assembly according to embodiments of the present invention;
FIG. 6 is an enlarged view of portion A of FIG. 4 according to embodiments of the present invention;
FIG. 7 is an enlarged view of portion B of FIG. 4 according to embodiments of the present invention;
FIG. 8 is a view illustrating a modified example of portion A of FIG. 4 according to embodiments of the present invention;
FIG. 9 is a view illustrating a modified example of portion B of FIG. 4 according to embodiments of the present invention;
FIG. 10 is a view illustrating a modified example of portion A of FIG. 4 according to embodiments of the present invention; and
FIG. 11 is a view illustrating a modified example of portion B of FIG. 4 according to embodiments of the present invention.

### DETAILED DESCRIPTION

Herein, some embodiments of the present invention will be described, in further detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term.

The embodiments described in this specification and the configurations shown in the drawings are provided as some of the embodiments of the present invention and do not represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

When "C to D" is stated, it means C or more and D or less, unless otherwise specified.

The terms used in the present specification are for describing embodiments of the present invention and are not intended to limit the present invention.

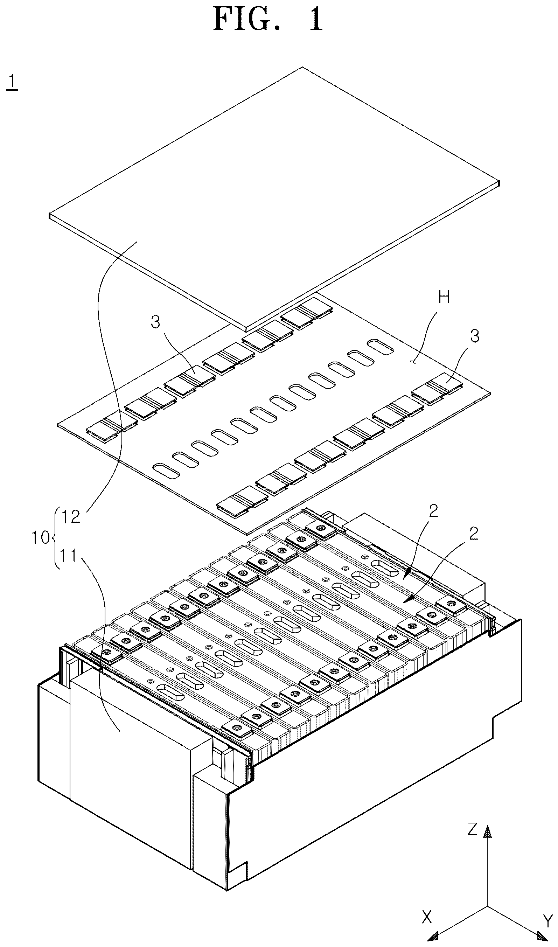

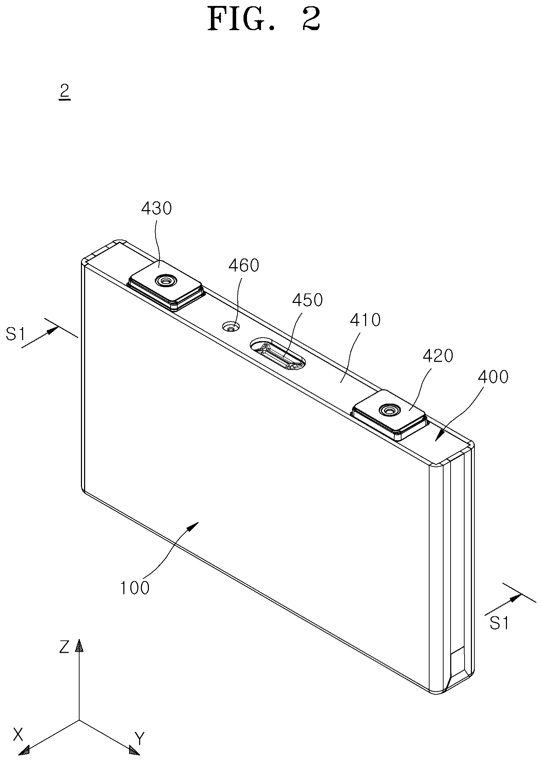

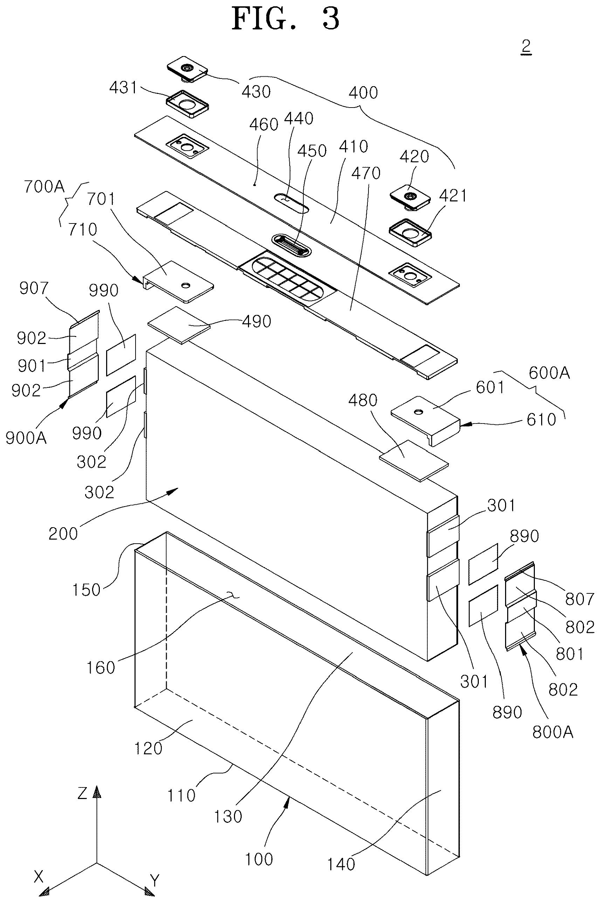

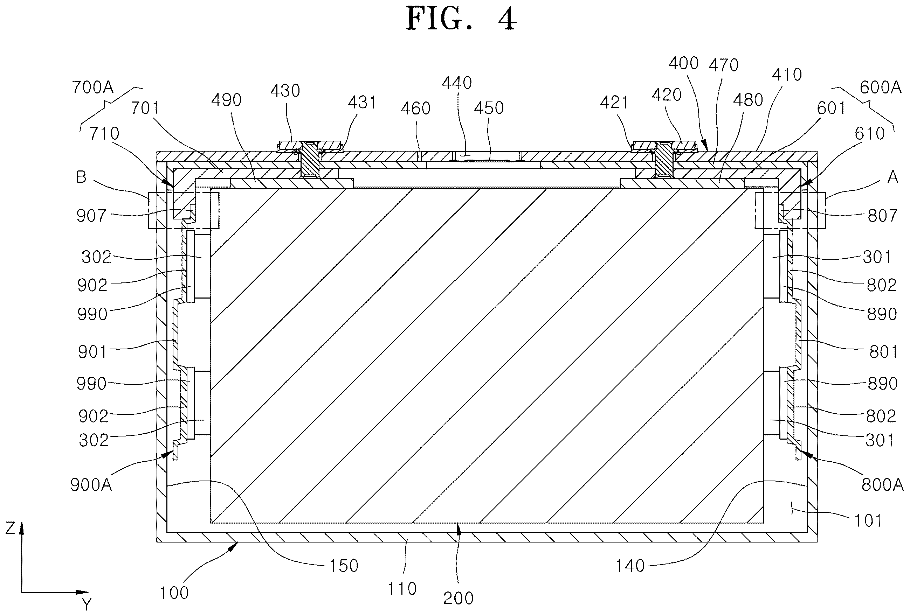

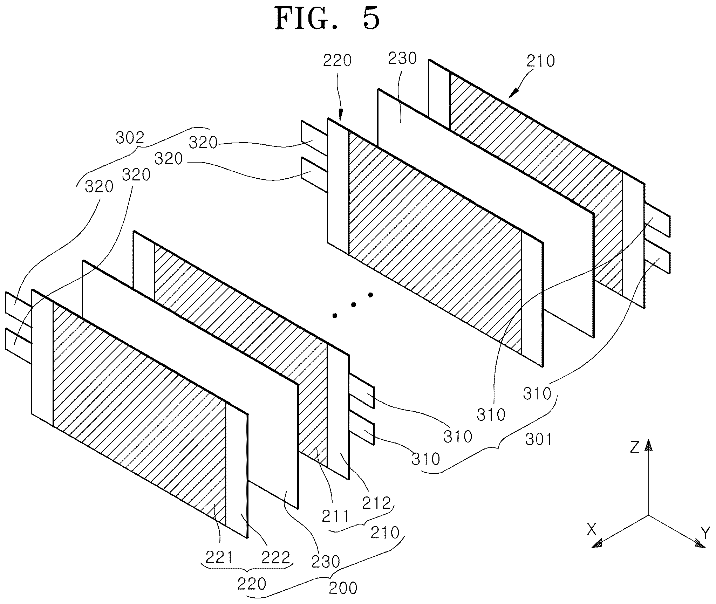

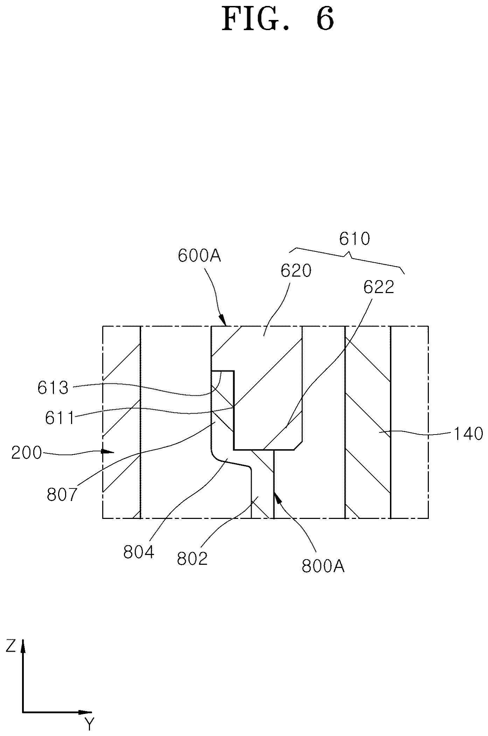

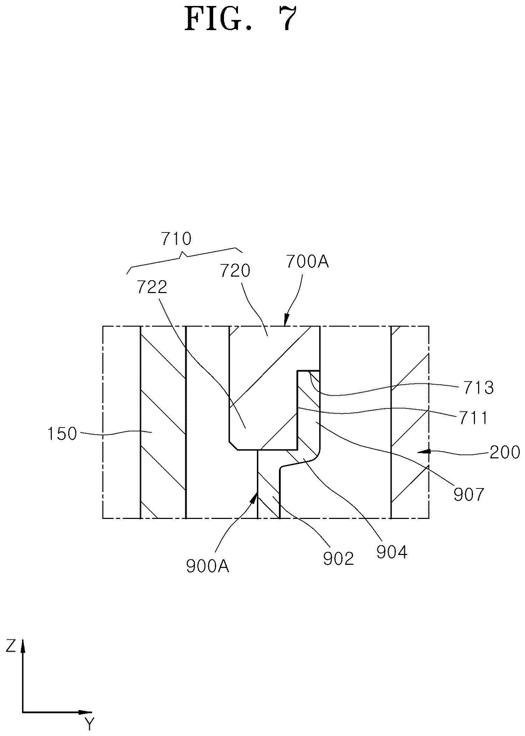

FIG. 1 is a perspective view schematically illustrating a configuration of a battery pack, FIG. 2 is a perspective view schematically illustrating a configuration of a secondary battery, FIG. 3 is an exploded perspective view schematically illustrating the configuration of the secondary battery, FIG. 4 is a cross-sectional view taken along line S1-S1 in FIG. 2, FIG. 5 is a view schematically illustrating a configuration of an electrode assembly, FIG. 6 is an enlarged view of portion A of FIG. 4, and FIG. 7 is an enlarged view of portion B of FIG. 4.

Referring to FIG. 1, a battery pack 1 includes a housing 10, a secondary battery 2, and a bus bar 3.

The housing 10 may form an approximate exterior of the battery pack 1 and may provide a space in which the secondary battery 2 may be accommodated.

The housing 10 may include a housing body 11 and a cover 12.

The housing body 11 may have the geometry of a box with an empty interior and one open side. A cross-sectional geometry of the housing body 11 is not limited to the quadrangular geometry illustrated in FIG. 1 and may be designed to have various geometries such as polygonal, circular, oval, or other geometries.

The cover 12 may be coupled to the housing body 11 and may close the internal space of the housing body 11. The cover 12 may have a substantially planar geometry and may face the open side of the housing body 11. The cover 12 may be fixed to the housing body 11 by various coupling methods, such as bolting, welding, fitting, etc.

The secondary battery 2 may function as a unit structure for storing and supplying power in the battery pack 1. The secondary battery 2 may be disposed inside the housing 10.

A plurality of secondary batteries 2 may be provided. The plurality of secondary batteries 2 may be arranged in two or more rows in at least one of a longitudinal direction (an X-axis direction based on FIG. 1) and a laterial direction (a Y-axis direction based on FIG. 1) of the housing 10. FIG. 1 illustrates that the plurality of secondary batteries 2 are arranged in twelve rows in the longitudinal direction of the housing 10, but the arrangement of the plurality of secondary batteries 2 is not limited thereto and may be designed to have various arrangements. The plurality of secondary batteries 2 may be disposed in parallel. The number of secondary batteries 2 may be designed in various ways depending on the size, shape, and the like, of the housing 10.

The plurality of secondary batteries 2 may be electrically connected by the bus bar 3.

The bus bar 3 may be disposed between the cover 12 and the secondary batteries 2. A plurality of bus bars 3 may be provided. Each bus bar 3 may connect a pair of neighboring secondary batteries 2 in series or parallel.

A first terminal 420 of one secondary battery 2 among the pair of neighboring secondary batteries 2 and a second terminal 430 of the other of the neighboring secondary batteries 2 may face each other in the longitudinal direction of the housing 10. That is, a front wall 120 of any one of the neighboring secondary batteries 2 may be disposed to face a rear wall 130 of the other secondary battery 2.

The bus bar 3 may be connected to the first terminal 420 of one of the pair of secondary batteries 2 adjacent to each other and the second terminal 430 of the other on both sides. Accordingly, the plurality of secondary batteries 2 may be connected to each other in series by the bus bar 3.

However, the bus bar 3 is not limited to such configuration, and may be connected to each of the first terminal 420 of one of the pair of neighboring secondary batteries 2 and the first terminal 420 of the other secondary battery 2 or connected to each of the second terminal 430 of one of the pair of neighboring secondary batteries 2 and the second terminal 430 of the other secondary battery 2.

The bus bar 3 may include an electrically conductive material such as copper, aluminum, nickel, or the like. A specific shape of the bus bar 3 is not limited to that shown in FIG. 1 and may have various geometries capable of electrically connecting the neighboring secondary batteries 2.

The plurality of bus bars 3 may be supported in the housing 10 by a bus bar holder H.

The bus bar holder H may be formed to have a flat planar geometry. The bus bar holder H may be disposed between the cover 12 and the secondary batteries 2. The bus bar 3 may be fixed to the bus bar holder H by various coupling methods such as fitting, bolting, injection joining, or the like. The bus bar holder H may be configured to include an electrically insulating polymer compound material.

Referring to FIGS. 2 to 7, the secondary battery 2 includes a case 100, an electrode assembly 200, a cap plate 410, the first terminal 420, a first plate 800A, and a first current collector 600A.

The secondary battery is shown as a prismatic lithium-ion secondary battery. However, the present invention is not limited thereto, and the secondary battery may be a lithium polymer battery or a cylindrical battery.

The case 100 may form an approximate exterior of the secondary battery 2 and accommodate the electrode assembly 200.

The case 100 may include a plurality of walls 110, 120, 130, 140, and 150 that define an internal space 101. The plurality of walls 110, 120, 130, 140, and 150 may include a bottom wall 110, a front wall 120, a rear wall 130, a first side wall 140, and a second side wall 150.

The bottom wall 110 may form a lower exterior of the case 100 (see FIG. 3). The bottom wall 110 may have a rectangular planar geometry. The bottom wall 110 may be seated on a bottom surface of the housing body 11.

The front wall 120, the rear wall 130, the first side wall 140, and the second side wall 150 may form an exterior of the periphery of the case 100.

The front wall 120, the rear wall 130, the first side wall 140, and the second side wall 150 may have planar geometries extending upward from edges of the bottom wall 110 (see FIG. 3). The front wall 120, the rear wall 130, the first side wall 140, and the second side wall 150 may surround the space above the bottom wall 110. The front wall 120, the rear wall 130, the first side wall 140, and the second side wall 150 may form a rectangular cross-sectional geometry.

The front wall 120 and the rear wall 130 may be disposed to face each other in the lateral direction of the case 100. The front wall 120 and the rear wall 130 may be disposed parallel to each other. Areas of the front wall 120 and the rear wall 130 may be substantially the same.

The first side wall 140 and the second side wall 150 may face each other in a longitudinal direction of the case 100. The first side wall 140 may be located on one side in the longitudinal direction of the case 100, and the second side wall 150 may be located on the other side in the longitudinal direction of the case 100.

The first side wall 140 and the second side wall 150 may be disposed parallel to each other. Areas of the first side wall 140 and the second side wall 150 may be substantially the same. The areas of the first side wall 140 and the second side wall 150 may be less than the areas of the front wall 120 and the rear wall 130.

The case 100 may include an opening 160. The opening 160 may refer to a space defined by upper end portions of the front wall 120, the rear wall 130, the first side wall 140, and the second side wall 150. The opening 160 may interconnect the internal space 101 and an external space of the case 100.

Accordingly, the case 100 according to the embodiment may have a rectangular geometry with an open top.

A first direction described below may refer to a direction parallel to the Y-axis and a direction from the second side wall 150 toward the first side wall 140 based on FIGS. 2 to 4. A second direction may refer to a direction parallel to the X-axis and a direction from the front wall 120 toward the rear wall 130 based on FIGS. 2 to 4. A third direction may refer to a direction parallel to the Z-axis and a direction from the opening 160 toward the bottom wall 110 based on FIGS. 2 to 4.

The electrode assembly 200 may function as a unit structure that performs charging and discharging operations of power in the secondary battery. The electrode assembly 200 may be stored in the internal space 101 of the case 100.

The electrode assembly 200 may include a first electrode 210, a second electrode 220, and a separator 230 disposed between the first electrode 210 and the second electrode 220. A plurality of first electrodes 210, separators 230, and second electrodes 220 may be provided.

The electrode assembly 200 is shown to have a stacked form in which the plurality of first electrodes 210, separators 230, and second electrodes 220 are sequentially stacked in the second direction will be described. However, the form of the electrode assembly 200 is not limited thereto, and may also have a form wound around a winding axis in a clockwise direction or counterclockwise direction where the first electrodes 210, the separators 230, and the second electrodes 220 are stacked.

The first electrode 210 may function as either a positive electrode or negative electrode of the electrode assembly 200. The first electrode 210 is shown as the positive electrode of the electrode assembly 200. However, the first electrode 210 is not limited thereto and may also function as the negative electrode of the electrode assembly 200.

The first electrode 210 may have a foil geometry including a metal such as aluminum or an aluminum alloy. The type, size, shape, or the like of the first electrode 210 is not particularly limited as long as the first electrode 114 has conductivity without causing a detrimental chemical change to the secondary battery. A cross-sectional geometry of the first electrode 210 may have various shapes in addition to the rectangular geometry shown in FIG. 5.

A plurality of first electrodes 210 may be provided. The plurality of first electrodes 210 may be arranged between the front wall 120 and the rear wall 130 of the case 100 in the second direction. The number of first electrodes 210 may vary depending on the charging capacity, or the like, of the secondary battery 2.

A first active material layer 211 may be applied on at least a portion of the first electrode 210. The first active material layer 211 may be applied on both surfaces of the first electrode 210, or alternatively, may be applied on only one surface of the first electrode 210.

Because the first electrode 210 functions as the positive electrode in the embodiment, the first active material layer 211 may include a positive electrode active material.

The positive electrode active material may be a reversible intercalation and deintercalation compound for lithium (i.e., a lithiated intercalation compound). The positive electrode active material may include compound oxides of a metal including cobalt, manganese, nickel, iron, or a combination thereof. Lithium may be used as the positive electrode active material.

For example, the positive electrode active material may include lithium-iron-phosphorus oxide (LiFePO₄, LFP), lithium-manganese-iron-phosphorus oxide (LiMnFePO₄, LMFP), or lithium-nickel-cobalt-manganese oxide (LiNixCoyMnzO2, LNCM). Here, 0<x<1, 0<y<1, 0<z<1, and x+y+z=1.

The positive electrode active material may include only one of lithium-iron-phosphorus oxide (LiFePO₄, LFP), lithium-manganese-iron-phosphorus oxide (LiMnFePO₄, LMFP), or lithium-nickel-cobalt-manganese oxide (LiNiₓCo_{y}Mn_{z}O₂, LNCM). The positive electrode active material may include may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, LNCM).

The first active material layer may include a positive electrode conductive material.

The positive electrode conductive material ensures conductivity to the positive electrode active material layer. Any material that does not cause a detrimental chemical change and is electronically conductive may be used as the positive electrode conductive material.

Non-limiting examples of the positive electrode conductive material may include a carbon-based material such as natural graphite, artificial graphite, carbon black, acetylene black, Ketjen black, carbon fiber, carbon nanofibers, carbon nanotubes, a metal-based material in the form of a metal powder or metal fiber containing copper, nickel, aluminum, silver, or the like, a conductive polymer such as a polyphenylene derivative, or a mixture thereof.

The first active material layer may include a positive electrode binder.

The positive electrode binder bonds particles constituting the positive electrode active material to one another. The positive electrode binder attaches the positive electrode active material to the first electrode 210.

A non-aqueous binder, an aqueous binder, a dry binder, or a combination thereof may be used as a non-limiting example of the positive electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When the aqueous binder is used as the positive electrode binder, the first active material layer may include a cellulose compound which provides viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a fibrous polymer material, and may include polytetrafluoroethylene, polyvinylidene fluoride, a polyvinylidene fluoridehexafluoropropylene copolymer, polyethylene oxide, or a combination thereof.

The first electrode 210 may include a first uncoated portion 212 on which the first active material layer 211 is not applied. The first uncoated portion 212 may be disposed in one end region of the first electrode 210 facing the first side wall 140 in the case 100. However, the configuration of the first uncoated portion 212 is not limited thereto, and the first uncoated portion 212 may be formed over an entire edge region of the first electrode 210.

The second electrode 220 may function as the other of the positive electrode and the negative electrode of the electrode assembly 200. The second electrode 220 is shown as the negative electrode of the electrode assembly 200. However, the second electrode 220 is not limited thereto and may also function as the positive electrode of the electrode assembly 200.

A plurality of second electrodes 220 may be provided. The plurality of second electrodes 220 may be arranged between the front wall 120 and the rear wall 130 of the case 100 in the second direction. The first electrodes 210 and the second electrodes 220 may be alternately disposed in the second direction. The second electrode 220 may be spaced apart from the first electrode 210 by a set interval in the second direction.

The second electrode 220 may have a foil geometry including a metal such as copper, a copper alloy, nickel, or a nickel alloy. The type, size, shape, etc. of the second electrode 220 is not particularly limited as long as the second electrode 220 has conductivity without causing a detrimental chemical change to the secondary battery. A cross-sectional geometry of the second electrode 220 may have various geometries in addition to the rectangular geometry shown in FIG. 5.

A second active material layer 221 may be applied on at least a portion of the second electrode 220. The second active material layer 221 may be applied on both surfaces of the second electrode 220, or alternatively, may be applied on only one surface of the second electrode 220.

Because the second electrode 220 functions as the negative electrode, the second active material layer 221 may include a negative electrode active material.

The negative electrode active material may include a material into which lithium ions may be reversibly intercalated and/or from which lithium ions may be reversibly deintercalated. The negative electrode active material may include a lithium metal, a lithium metal alloy, a material which may be doped in and undoped from lithium, or a transition metal oxide.

The material into which lithium ions may be reversibly intercalated and/or from which lithium ions may be reversibly deintercalated may include a carbon-based negative electrode active material such as crystalline carbon, amorphous carbon, or a combination thereof. Non-limiting examples of the crystalline carbon may include graphite such as natural graphite or artificial graphite in amorphous, platy, flake, spherical, or fibrous form. Non-limiting examples of the amorphous carbon may include soft or hard carbon, mesophase pitch carbide, fired coke, or the like.

The lithium metal alloy may include Na, K, Rb, Cs, Fr, Be, Mg, Ca, Sr, Si, Sb, Pb, In, Zn, Ba, Ra, Ge, Al, or Sn.

The material which may be doped in and undoped from lithium may include a Si-based negative electrode active material or a Sn-based negative electrode active material. The Si-based negative electrode active material may include silicon, a silicon-carbon composite, SiOₓ (x=1 or 2), a Si-Q alloy (Q is selected from the group consisting of alkaline metals, alkaline earth metals, Group 13 elements, Group 14 elements (excluding Si), Group 15 elements, Group 16 elements, transition metals, rare earth elements, and combinations thereof), or a combination thereof. The Sn-based negative electrode active material may include Sn, SnO₂, a Sn-based alloy, or a combination thereof.

The silicon-carbon composite may include a composite of silicon and amorphous carbon. The silicon-carbon composite may include silicon particles coated with amorphous carbon. For example, the silicon-carbon composite may include secondary particles (cores) in which silicon primary particles are assembled and an amorphous carbon coating layer (shell) located on the surface of the secondary particles.

The amorphous carbon may be located between the silicon primary particles so that, for example, the silicon primary particles may be coated with the amorphous carbon. The secondary particles may be dispersed and present in an amorphous carbon matrix.

The silicon-carbon composite may include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used in combination with the carbon-based negative electrode active material.

The second active material layer 221 may include a negative electrode conductive material and a negative electrode binder.

The negative electrode conductive material ensures conductivity to the second active material layer 221. Any material which does not cause a detrimental chemical change and is electronically conductive may be used. Non-limiting examples of the negative electrode conductive material may include a carbon-based material such as natural graphite, artificial graphite, carbon black, acetylene black, Ketjen black, carbon fiber, carbon nanofibers, carbon nanotubes, a metal-based material in the form of a metal powder or metal fiber containing copper, nickel, aluminum, silver, or the like, a conductive polymer such as a polyphenylene derivative, or a mixture thereof.

The negative electrode binder attaches particles constituting the negative electrode active material to one another. The negative electrode binder attaches the negative electrode active material to the second electrode 220.

A non-aqueous binder, an aqueous binder, a dry binder, or a combination thereof may be used as a non-limiting example of the negative electrode binder.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When the aqueous binder is used as the negative electrode binder, the second active material layer 221 may include a cellulose compound providing viscosity. One or more of carboxymethyl cellulose, hydroxypropyl methyl cellulose, methyl cellulose, and alkaline metal salts thereof may be mixed and used as the cellulose compound. Na, K, or Li may be used as an alkaline metal.

The dry binder is a polymer material capable of being fiberized, and may include polytetrafluoroethylene, polyvinylidene fluoride, a polyvinylidene fluoridehexafluoropropylene copolymer, polyethylene oxide, or a combination thereof.

The second electrode 220 may include a second uncoated portion 222 on which the second active material layer 221 is not applied. The second uncoated portion 222 may be disposed in the other end region of the second electrode 220 facing the second side wall 150 in the case 100. However, the configuration of the second uncoated portion 222 is not limited thereto, and the second uncoated portion 222 may be formed over an entire edge region of the second electrode 220.

The separator 230 may be disposed between the first electrode 210 and the second electrode 220. The separator 230 may prevent a short circuit between the first electrode 210 and the second electrode 220 while allowing lithium ions to migrate between the first electrode 210 and the second electrode 220.

The separator 230 may entirely cover a surface region of the electrode assembly 200. Accordingly, the separator 230 may prevent the first electrode 210 and the second electrode 220 from being directly exposed to the outside of the electrode assembly 200.

The separator 230 may include polyethylene, polypropylene, polyvinylidene fluoride, or a multilayer film of two or more layers. The separator 230 may include a mixed multilayer film such as a polyethylene/polypropylene two-layer separator, a polyethylene/polypropylene/polyethylene three-layer separator, a polypropylene/polyethylene/polypropylene three-layer separator, or the like.

The separator 230 may include a porous substrate and a coating layer which is located on one surface or both surfaces of the porous substrate. The separator 230 may include an organic material, an inorganic material, or a combination thereof.

The porous substrate may include polyolefins such as polyethylene and polypropylene, polyesters such as polyethylene terephthalate and polybutylene terephthalate, polyacetal, polyamide, polyimide, polycarbonate, polyetherketone, polyaryl etherketone, polyetherimide, polyamideimide, polybenzimidazole, polyethersulfone, polyphenylene oxide, cyclic olefin copolymers, polyphenylene sulfide, polyethylene naphthalate, glass fiber, Teflon, and polytetrafluoroethylene, or a polymer film including copolymers or a mixture of two or more thereof.

The organic material may include a polyvinylidene fluoride-based polymer or a (meth)acrylic-based polymer.

The inorganic material may include particles of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, or a combination thereof, but is not limited thereto.

The organic material and the inorganic material may be present as a mixture in one coating layer. The organic material and the inorganic material may be present in a form in which a coating layer including an organic material and a coating layer including an inorganic material are stacked.

A first tab member 301 may be connected to the first electrode 210. As the first electrode 210 is shown as the positive electrode, the first tab member 301 may function as a positive electrode tab of the secondary battery 2. However, the first tab member 301 is not limited thereto, and may function as a negative electrode tab of the secondary battery 2 when the first electrode 210 is the negative electrode.

The first tab member 301 may extend from the electrode assembly 200 in the first direction. The first tab member 301 may extend from the electrode assembly 200 toward the first side wall 140 inside the case 100.

A plurality of first tab members 301 may be provided. The plurality of first tab members 301 may be arranged in the third direction. A pair of first tab members 301 may be formed, and the pair of first tab members 301 may be spaced apart by a predetermined distance along the third direction.

The first tab member 301 may include a plurality of first tabs 310.

The first tab 310 may have a foil geometry extending from the first uncoated portion 212 of the first electrode 210 in the first direction. The first tab 310 may have a substantially rectangular geometry. However, the geometry of the first tab 310 is not limited thereto and may have various geometries.

The first tab 310 may be formed as a single piece along with the first electrode 210. For example, the first tab 310 may be the remaining region of the first uncoated portion 212 which remains after a partial region of the first uncoated portion 212 is cut or removed by notching processing or the like. Alternatively, the first tab 310 may be manufactured separately from the first electrode 210 and then connected to the first uncoated portion 212 by welding or the like. A material of the first tab 310 may be substantially the same as a material of the first electrode 210.

The number of first tabs 310 may be substantially the same as the number of first electrodes 210. Each of the first tabs 310 may individually extend from the first uncoated portion 212 of a different first electrode 210. Neighboring first tabs 310 may be disposed to face each other in the second direction. That is, the plurality of first tabs 310 may be arranged in the second direction. The neighboring first tabs 310 may be disposed parallel to each other. Accordingly, the first tab member 301 may be an assembly of the plurality of first tabs 310 arranged in the second direction. The neighboring first tabs 310 may be in contact with each other and may also be spaced apart from each other by a thickness of the separator 230.

The secondary battery 2 may include a second tab member 302.

The second tab member 302 may be electrically connected to the second electrode 220. As the second electrode 220 is shown as the negative electrode, the second tab member 302 may function as a negative electrode tab of the secondary battery 2. However, the second tab member 302 is not limited thereto, and may function as a positive electrode tab of the secondary battery 2 when the second electrode 220 is the positive electrode.

The second tab member 302 may extend from the electrode assembly 200 in a direction opposite to the first direction. The second tab member 302 may extend from the electrode assembly 200 toward the second side wall 150 inside the case 100. That is, the first tab member 301 and the second tab member 302 may extend from the electrode assembly 200 in directions opposite to each other.

A plurality of second tab members 302 may be provided. The plurality of second tab members 302 may be arranged in the third direction. A pair of second tab members 302 may be formed, and the pair of second tab members 302 may be spaced apart by a predetermined distance in the third direction.

The second tab member 302 may include a plurality of second tabs 320.

The second tab 320 may have a foil geometry extending from the second uncoated portion 222 of the second electrode 220 in the direction opposite to the first direction. The second tab 320 may have a substantially rectangular geometry. However, the shape of the second tab 320 is not limited thereto and may have various geometries.

The second tab 320 may be formed as a single piece along with the second electrode 220. For example, the second tab 320 may be the remaining region of the second uncoated portion 222 which remains after a partial region of the second uncoated portion 222 is cut or removed by notching processing or the like. Alternatively, the second tab 320 may be manufactured separately from the second electrode 220 and then connected to the second uncoated portion 222 by welding or the like. A material of the second tab 320 may be substantially the same as a material of the second electrode 220.

The number of second tabs 320 may be substantially the same as the number of second electrodes 220. Each of the second tabs 320 may individually extend from the second uncoated portion 222 of a different second electrode 220. Neighboring second tabs 320 may be disposed to face each other in the second direction. That is, the plurality of second tabs 320 may be arranged in the second direction. The neighboring second tabs 320 may be disposed parallel to each other. Accordingly, the second tab members 302 may be an assembly of the plurality of second tabs 320 arranged in the second direction. The neighboring second tabs 320 may be in contact with each other and may also be spaced apart from each other by the thickness of the separator 230.

The cap plate 410 is coupled to the case 100 to close an open side of the case 100. The cap plate 410 closes the opening 160. The first terminal 420 is installed on the cap plate 410.

The cap plate 410 and the first terminal 420 may be included in the cap assembly 400. The cap assembly 400 may include the second terminal 430. The first terminal 420 may be installed on one side of the cap plate 410 in the longitudinal direction, and the second terminal 430 may be installed on the other side of the cap plate 410 in the longitudinal direction. The first terminal 420 may be located closer to the first side wall 140 than to the second side wall 150, and the second terminal 430 may be located closer to the second side wall 150 than to the first side wall 140.

The cap plate 410 may be disposed to face the electrode assembly 200 in the third direction. That is, the cap plate 410 may be disposed at a position spaced a predetermined distance apart from the electrode assembly 200 in the third direction. The cap plate 410 may be disposed parallel to the bottom wall 110 of the case 100.

The cap plate 410 may be seated on an upper end portion of the case 100, more specifically, on the upper end portions of the front wall 120, the rear wall 130, the first side wall 140, and the second side wall 150. The cap plate 410 may be coupled to the case 100 by various types of coupling methods such as welding, bolting, fitting, and the like.

The first terminal 420 may protrude outward from the cap plate 410. The first terminal 420 may be electrically connected to the first electrode 210. Because the first electrode 210 is shown to function as a positive electrode, the first terminal 420 may be exemplified as a positive electrode terminal of the secondary battery 2.

The first terminal 420 may be inserted into the cap plate 410. An upper end portion of the first terminal 420 may protrude outward from the cap plate 410. FIG. 3 illustrates an example in which the first terminal 420 has a rectangular cross-sectional geometry, but the cross-sectional geometry of the first terminal 420 is not limited thereto and may have various geometries such as a circular geometry, an oval geometry, a polygonal geometry, or the like. The first terminal 420 may include an electrically conductive material such as aluminum, nickel, copper, or the like.

A first gasket 421 may be installed between the cap plate 410 and the first terminal 420. The first gasket 421 may electrically insulate the cap plate 410 and the first terminal 420 and prevent moisture or foreign substances from entering between the cap plate 410 and the first terminal 420.

The first gasket 421 may include an insulating material such as polyethylene (PE), polypropylene (PP), polyethylene terephthalate (PET) rubber, or the like. The first gasket 421 may be fixed between the cap plate 410 and the first terminal 420 by pressing, injection, adhesion, or the like.

The second terminal 430 may protrude outward from the cap plate 410 at a position spaced apart from the first terminal 420. The second terminal 430 may be electrically connected to the second electrode 220. Because the second electrode 220 is shown to function as a negative electrode, the second terminal 430 may be a negative electrode terminal of the secondary battery 2.

The second terminal 430 may be inserted into the cap plate 410. An upper end portion of the second terminal 430 may protrude to the outside of the cap plate 410. FIG. 3 illustrates an example in which the second terminal 430 has a rectangular cross-sectional geometry, but the cross-sectional geometry of the second terminal 430 is not limited thereto and may have various geometries such as a circular geometry, an oval geometry, a polygonal geometry, or the like. The second terminal 430 may include an electrically conductive material such as aluminum, nickel, copper, or the like.

A second gasket 431 may be installed between the cap plate 410 and the second terminal 430. The second gasket 431 may electrically insulate the cap plate 410 and the second terminal 430 and prevent moisture or foreign substances from entering between the cap plate 410 and the second terminal 430.

The second gasket 431 may include an insulating material such as polyethylene (PE), polypropylene (PP), polyethylene terephthalate (PET) rubber, or the like. The second gasket 431 may be fixed between the cap plate 410 and the second terminal 430 by pressing, injection, adhesion, or the like.

The cap assembly 400 may include a vent hole 440 and a cell vent 450.

The vent hole 440 may have a hole geometry which vertically passes through both sides of the cap plate 410 in the third direction. The vent hole 440 may provide a path through which flames, gas, smoke, or the like, formed in the case 100 is discharged to the exterior of the case 100 when thermal runaway of the secondary battery 2 occurs due to an overcurrent or the like. The vent hole 440 may be disposed between the first terminal 420 and the second terminal 430. A cross-sectional geometry of the vent hole 440 may have various geometries such as an oval geometry, a circular geometry, a polygonal geometry, or the like.

The cell vent 450 is installed in the vent hole 440 and may be opened and closed in response to a change in internal pressure of the case 100. The cell vent 450 may prevent an electrolyte and the like in the case 100 from leaking out of the case 100 or moisture, foreign substances, or the like from entering the case 100 by closing the vent hole 440 during normal operation of the secondary battery 2. The cell vent 450 may guide flames, gas, smoke, or the like formed in the case 100 to be discharged to the exterior of the case 100 by opening the vent hole 440 when thermal runaway of the secondary battery 2 occurs.

The cell vent 450 may be formed to have a substantially planar geometry. The cell vent 450 may be fixed to the cap plate 410 by various coupling methods such as welding, bolting, fitting, and the like. The cell vent 450 may be disposed in the vent hole 440, or disposed to face the vent hole 440 at an upper or lower side of the cap plate 410.

A thickness of the cell vent 450 parallel to the third direction may be less than a thickness of the cap plate 410. Accordingly, the cell vent 450 may rupture or break when the internal pressure of the case 100 increases. The cell vent 450 may include a notch formed concavely toward the inside of the cell vent 450 to preferentially break when the internal pressure of the case 100 increases.

The cap assembly 400 may include an electrolyte inlet 460 formed to pass through the cap plate 410 and in which a sealing stopper may be installed. The electrolyte inlet 460 may be disposed to be spaced a predetermined distance apart from the vent hole 440. The electrolyte inlet 460 may be disposed between the first terminal 420 and the second terminal 430.

The cap assembly 400 may include an inner insulating member 470.

The inner insulating member 470 may be disposed between the cap plate 410 and the electrode assembly 200. The inner insulating member 470 may prevent direct contact between the cap plate 410 and the electrode assembly 200 to insulate the cap plate 410 and the electrode assembly 200.

The inner insulating member 470 may face the electrode assembly 200 in the case 100 in the third direction. That is, the cap plate 410, the inner insulating member 470, and the electrode assembly 200 may be sequentially disposed in the third direction.

The inner insulating member 470 may include a first current collector insulation plate 480 interposed between a first terminal connecting portion 601 of the first current collector 600A and the electrode assembly 200, and a second current collector insulation plate 490 interposed between a second terminal connecting portion 701 of a second current collector 700A and the electrode assembly 200. The inner insulating member 470 may include an insulating material such as polyethylene (PE), polypropylene (PP), polyethylene terephthalate (PET) rubber, or the like.

The first plate 800A is located between the first side wall 140 and the electrode assembly 200 in the internal space 101. The first plate 800A may face the first side wall 140 and extend parallel to a longitudinal direction of the first side wall 140. The first plate 800A may include a pair of first tab connecting portions 802 and a first central rib portion 801 between the pair of first tab connecting portions 802.

The first central rib portion 801 may have a step configuration from the pair of first tab connecting portions 802 and may protrude closer to the first side wall 140. The first tab connecting portion 802 may be electrically connected to the first tab member 301 of the electrode assembly 200. The pair of first tab connecting portions 802 may extend in the third direction.

The secondary battery 2 may include a pair of first sub plates 890. The pair of first tab connecting portions 802 may electrically come into contact with the pair of first sub plates 890.

Each of the first sub plates 890 may be interposed between the corresponding first tab member 301 and the corresponding first tab connecting portion 802, and may electrically come into contact with the corresponding first tab member 301 and the corresponding first tab connecting portion 802. The first sub plate 890 may provide an electrical connection between the first tab member 301 and the first plate 800A by restricting the relative movement of the plurality of first tabs 310 constituting the first tab member 301. Accordingly, the first sub plate 890 may prevent the electrical connection to some of the first tabs 310 from being lost due to the relative movement of the first tabs 310.

The first plate 800A includes a first current collector connecting portion 807. The first current collector connecting portion 807 is provided on one side of the first plate 800A. For example, the first current collector connecting portion 807 may be provided at an end portion of the first plate 800A in a positive Z-axis direction (+).

The first plate 800A may include a first stepped portion 804 that connects the first tab connecting portion 802 and the first current collector connecting portion 807 in a stepped manner. The first stepped portion 804 may be provided between the first tab connecting portion 802, which closer to the cap plate 410 among the pair of first tab connecting portions 802, and the first current collector connecting portion 807.

A distance between the first current collector connecting portion 807 and the electrode assembly 200 may be less than a distance between the first tab connecting portion 802 and the electrode assembly 200 in the first direction due to the first stepped portion 804.

The first current collector 600A includes the first terminal connecting portion 601 and a first plate connecting portion 610. The first terminal connecting portion 601 is electrically coupled to the first terminal 420. The first plate connecting portion 610 is connected to the first terminal connecting portion 601. The first plate connecting portion 610 includes a first welding surface 611 that is welded to the first current collector connecting portion 807 as a surface facing away from the first sidewall 140.

The first plate connecting portion 610 may include a first stopper surface 613 that blocks the first current collector connecting portion 807 and intersects the first welding surface 611. An end edge of the first current collector connecting portion 807 may be located to face the first stopper surface 613.

A side surface of the first current collector connecting portion 807 welded to the first welding surface 611 may be a side surface facing the first welding surface 611 and facing away from the electrode assembly 200.

The first plate connecting portion 610 may include a first thick portion 620 and a first thin portion 622. The first thick portion 620 may include the first stopper surface 613. A thickness of the first thick portion 620 in the first direction may be greater than a thickness of the first current collector connecting portion 807.

The first thin portion 622 may include the first welding surface 611. A thickness of the first thin portion 622 in the first direction may be less than a thickness of the first thick portion 620.

When an impact is applied to the case 100 of the secondary battery 2 in the first direction or the third direction, the first welding surface 611 may be separated from the first current collector connecting portion 807 or the first current collector connecting portion 807 and the first tab connecting portion 802 are bent or broken, and thus the first plate 800A may be easily separated from the first plate connecting portion 610 of the first current collector 600A. Accordingly, the first plate connecting portion 610 does not apply a large impact to the electrode assembly 200, and a short circuit between the first current collector 600A and the electrode assembly 200 and the resulting thermal runaway of the secondary battery 2 may be suppressed.

The secondary battery 2 may include a second plate 900A and the second current collector 700A.

The second plate 900A is located between the second side wall 150 and the electrode assembly 200 in the internal space 101. The second plate 900A may face the second side wall 150 and extend parallel to a longitudinal direction of the second side wall 150. The second plate 900A may include a pair of second tab connecting portions 902 and a second central rib portion 901 between the pair of second tab connecting portions 902.

The second central rib portion 901 may be stepped from the pair of second tab connecting portions 902 and may protrude closer to the second side wall 150. The second tab connecting portion 902 may be electrically connected to the second tab member 302 of the electrode assembly 200. The pair of second tab connecting portions 902 may extend in the third direction.

The secondary battery 2 may include a pair of second sub plates 990. The pair of second tab connecting portions 902 may electrically come into contact with the pair of second sub plates 990.

Each of the second sub plates 990 may be interposed between the corresponding second tab member 302 and the corresponding second tab connecting portion 902 and may electrically come into contact with the corresponding second tab member 302 and the corresponding second tab connecting portion 902. The second sub plate 990 may provide an electrical connection between the second tab member 302 and the second plate 900A by restricting the relative movement of the plurality of second tabs 320 constituting the second tab member 302. Accordingly, the second sub plate 990 may prevent the electrical connection to some of the second tabs 320 from being lost due to the relative movement of the second tabs 320.

The second plate 900A includes a second current collector connecting portion 907. The second current collector connecting portion 907 is provided on one side of the second plate 900A. For example, the second current collector connecting portion 907 may be provided at an end portion of the second plate 900A in the positive Z-axis direction (+).

The second plate 900A may include a second stepped portion 904 that connects the second tab connecting portion 902 and the second current collector connecting portion 907 in a stepped manner. The second stepped portion 904 may be provided between the second tab connecting portion 902, which is closer to the cap plate 410 among the pair of second tab connecting portions 902, and the second current collector connecting portion 907.

A distance between the second current collector connecting portion 907 and the electrode assembly 200 may be less than a distance between the second tab connecting portion 902 and the electrode assembly 200 in the first direction due to the second stepped portion 904.

The second current collector 700A includes the second terminal connecting portion 701 and a second plate connecting portion 710. The second terminal connecting portion 701 is electrically coupled to the second terminal 430. The second plate connecting portion 710 is connected to the second terminal connecting portion 701. The second plate connecting portion 710 includes a second welding surface 711 that is welded to the second current collector connecting portion 907 as a surface facing away from the second sidewall 150.

The second plate connecting portion 710 may include a second stopper surface 713 that blocks the second current collector connecting portion 907 and intersects the second welding surface 711. An end edge of the second current collector connecting portion 907 may be located to face the second stopper surface 713.

A side surface of the second current collector connecting portion 907 welded to the second welding surface 711 may be a side surface facing the second welding surface 711 and facing away from the electrode assembly 200.

The second plate connecting portion 710 may include a second thick portion 720 and a second thin portion 722. The second thick portion 720 may include the second stopper surface 713. A thickness of the second thick portion 720 in the first direction may be greater than a thickness of the second current collector connecting portion 907.

The second thin portion 722 may include the second welding surface 711. A thickness of the second thin portion 722 in the first direction may be smaller than a thickness of the second thick portion 720.

When an impact is applied to the case 100 of the secondary battery 2 in the first direction or the third direction, the second welding surface 711 may be separated from the second current collector connecting portion 907 or the second current collector connecting portion 907 and the second tab connecting portion 902 are bent or broken, and thus the second plate 900A may be easily separated from the second plate connecting portion 710 of the second current collector 700A. Accordingly, the second plate connecting portion 710 does not apply a large impact to the electrode assembly 200, and a short circuit between the second current collector 700A and the electrode assembly 200 and the resulting thermal runaway of the secondary battery 2 may be suppressed.

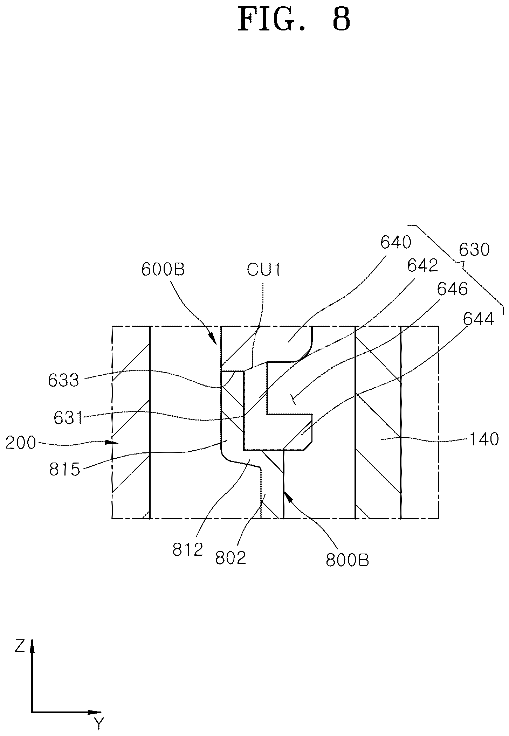

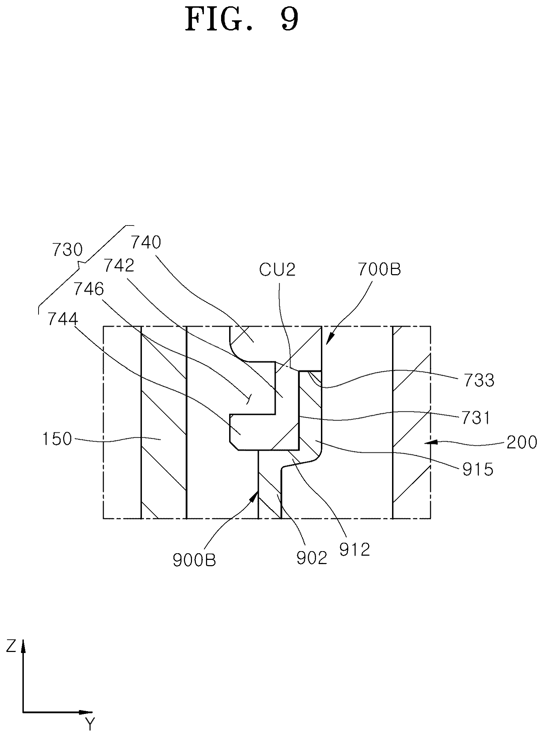

FIG. 8 is a view illustrating a modified example of portion A of FIG. 4 and FIG. 9 is a view illustrating a modified example of portion B of FIG. 4. Referring to FIGS. 8 and 9, a secondary battery 2 of the present invention may include a first current collector 600B, a second current collector 700B, a first plate 800B, and a second plate 900B illustrated in FIGS. 8 and 9, instead of the first current collector 600A, the second current collector 700A, the first plate 800A, and the second plate 900A illustrated in FIGS. 3 to 7.

The first plate 800B is located between the first side wall 140 and the electrode assembly 200 in the internal space 101. The first plate 800B may face the first side wall 140 and extend parallel to the longitudinal direction of the first side wall 140. The first plate 800B may include a pair of first tab connecting portions 802 and a first central rib portion 801 between the pair of first tab connecting portions 802. The first plate 800B further includes a first current collector connecting portion 815. The first current collector connecting portion 815 is provided on one side of the first plate 800B. For example, the first current collector connecting portion 815 may be provided at an end portion of the first plate 800B in the positive Z-axis direction (+).

The first plate 800B may further include a first stepped portion 812 that connects the first tab connecting portion 802 and the first current collector connecting portion 815 in a stepped manner. The first stepped portion 812 may be provided between the first tab connecting portion 802, which is closer to the cap plate 410 among the pair of first tab connecting portions 802, and the first current collector connecting portion 815.

A distance between the first current collector connecting portion 815 and the electrode assembly 200 may be less than a distance between the first tab connecting portion 802 and the electrode assembly 200 in the first direction due to the first stepped portion 812.

The first current collector 600B includes a first terminal connecting portion 601 and a first plate connecting portion 630. The first terminal connecting portion 601 is electrically coupled to the first terminal 420. The first plate connecting portion 630 is connected to the first terminal connecting portion 601. The first plate connecting portion 630 includes a first welding surface 631 that is welded to the first current collector connecting portion 815 as a surface facing away from the first sidewall 140.

The first plate connecting portion 630 may include a first stopper surface 633 that blocks the first current collector connecting portion 815 and intersects the first welding surface 631. An end edge of the first current collector connecting portion 815 may be located to face the first stopper surface 633.

A side surface of the first current collector connecting portion 815 welded to the first welding surface 631 may be a side surface facing the first welding surface 631 and facing away from the electrode assembly 200.

The first plate connecting portion 630 may include a first thick portion 640, a first thin portion 642, a first end thick portion 644, and a first groove portion 646. A thickness of the first thick portion 640 in the first direction may be greater than a thickness of the first current collector connecting portion 815.

A thickness of the first thin portion 642 in the first direction may be less than the thickness of the first thick portion 640. The first end thick portion 644 may be spaced apart from the first thick portion 640, may be bent at the first thin portion 642, and may protrude toward the first side wall 140. A thickness of the first end thick portion 644 in the first direction may be greater than the thickness of the first thin portion 642.

The first groove portion 646 may be a portion concavely recessed between the first thick portion 640 and the first end thick portion 644 so as to move away from the first side wall 140 in the first direction.

When an impact is applied to the case 100 of the secondary battery 2 in the first direction or the third direction, the first welding surface 631 may be separated from the first current collector connecting portion 815 or the first current collector connecting portion 815 and the first tab connecting portion 802 are bent or broken, and thus the first plate 800B may be easily separated from the first plate connecting portion 630 of the first current collector 600B. Accordingly, the first plate connecting portion 630 does not apply a large impact to the electrode assembly 200, and a short circuit between the first current collector 600B and the electrode assembly 200 and the resulting thermal runaway of the secondary battery 2 may be suppressed.

When the first plate connecting portion 630 is cut, the first thin portion 642 having the thinnest thickness may be cut along a virtual cutting line CU1.

In addition, when an impact is applied to the case 100 of the secondary battery 2 in the third direction, the first plate connecting portion 630 may be plastically deformed to increase or decrease a gap of the first groove portion 646 in the third direction to absorb the impact. Accordingly, the first plate connecting portion 630 does not apply a large impact to the electrode assembly 200, and a short circuit between the first current collector 600B and the electrode assembly 200 and the resulting thermal runaway of the secondary battery 2 may be reliably suppressed.

The second plate 900B is located between the second side wall 150 and the electrode assembly 200 in the internal space 101. The second plate 900B may face the second side wall 150 and extend parallel to the longitudinal direction of the second side wall 150. The second plate 900B may include a pair of second tab connecting portions 902 and a second central rib portion 901 between the pair of second tab connecting portions 902. The second plate 900B further includes a second current collector connecting portion 915. The second current collector connecting portion 915 is provided on one side of the second plate 900B. For example, the second current collector connecting portion 915 may be provided at an end portion of the second plate 900B in the positive Z-axis direction (+).

The second plate 900B may include a second stepped portion 912 that connects the second tab connecting portion 902 and the second current collector connecting portion 915 in a stepped manner. The second stepped portion 912 may be provided between the second tab connecting portion 902, which is closer to the cap plate 410 among the pair of second tab connecting portions 902, and the second current collector connecting portion 915.

A distance between the second current collector connecting portion 915 and the electrode assembly 200 may be less than a distance between the second tab connecting portion 902 and the electrode assembly 200 in the first direction due to the second stepped portion 912.

The second current collector 700B includes a second terminal connecting portion 701 and a second plate connecting portion 730. The second terminal connecting portion 701 is electrically coupled to the second terminal 430. The second plate connecting portion 730 is connected to the second terminal connecting portion 701. The second plate connecting portion 730 includes a second welding surface 731 that is welded to the second current collector connecting portion 915 as a surface facing away from the second sidewall 150.

The second plate connecting portion 730 may include a second stopper surface 733 that blocks the second current collector connecting portion 915 and intersects the second welding surface 731. An end edge of the second current collector connecting portion 915 may be located to face the second stopper surface 733.

A side surface of the second current collector connecting portion 915 welded to the second welding surface 731 may be a side surface facing the second welding surface 731 and facing away from the electrode assembly 200.

The second plate connecting portion 730 may include a second thick portion 740, a second thin portion 742, a second end thick portion 744, and a second groove portion 746. A thickness of the second thick portion 740 in the first direction may be greater than a thickness of the second current collector connecting portion 915.

A thickness of the second thin portion 742 in the first direction may be less than a thickness of the second thick portion 740. The second end thick portion 744 may be spaced apart from the second thick portion 740, may be bent at the second thin portion 742, and may protrude toward the second side wall 150. A thickness of the second end thick portion 744 in the first direction may be greater than the thickness of the second thin portion 742.

The second groove portion 746 may be a portion concavely recessed between the second thick portion 740 and the second end thick portion 744 so as to move away from the second side wall 150 in the first direction.

When an impact is applied to the case 100 of the secondary battery 2 in the first direction or the third direction, the second welding surface 731 may be separated from the second current collector connecting portion 915 or the second current collector connecting portion 915 and the second tab connecting portion 902 are bent or broken, and thus the second plate 900B may be easily separated from the second plate connecting portion 730 of the second current collector 700B. Accordingly, the second plate connecting portion 730 does not apply a large impact to the electrode assembly 200, and a short circuit between the second current collector 700B and the electrode assembly 200 and the resulting thermal runaway of the secondary battery 2 may be suppressed.

When the second plate connecting portion 730 is cut, the second thin portion 742 having the thinnest thickness may be cut along a virtual cutting line CU2.

In addition, when an impact is applied to the case 100 of the secondary battery 2 in the third direction, the second plate connecting portion 730 may be plastically deformed to increase or decrease a gap of the second groove portion 746 in the third direction to absorb the impact. Accordingly, the second plate connecting portion 730 does not apply a large impact to the electrode assembly 200, and a short circuit between the second current collector 700B and the electrode assembly 200 and the resulting thermal runaway of the secondary battery 2 may be reliably suppressed.

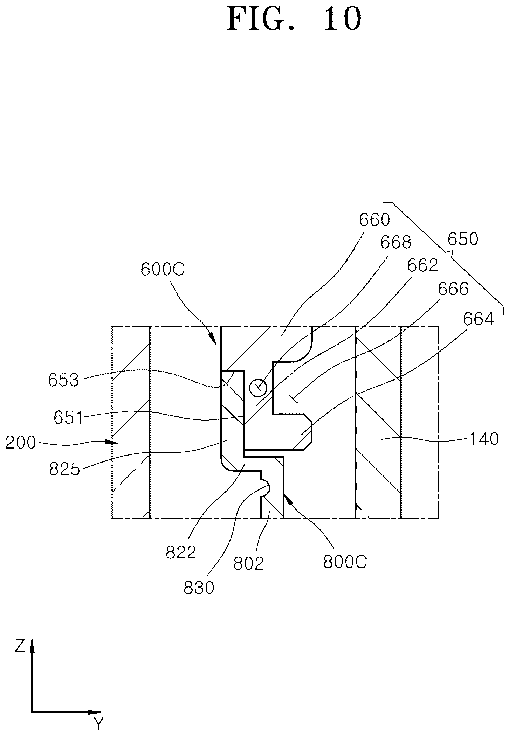

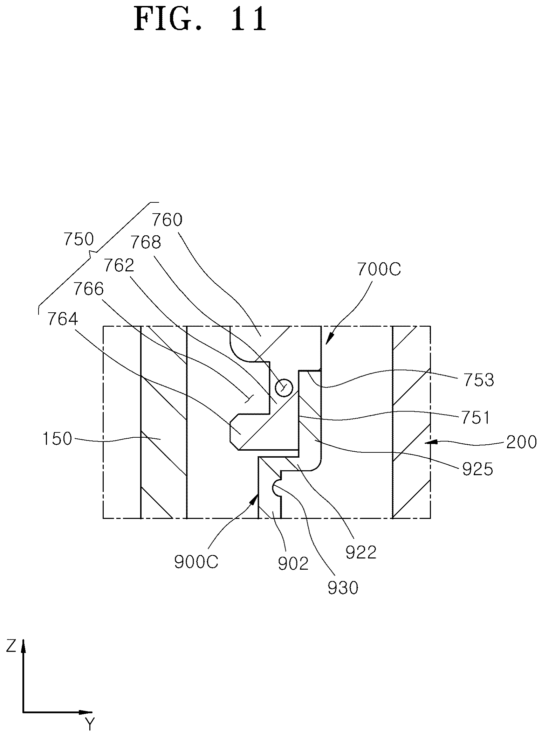

FIG. 10 is a view illustrating a modified example of portion A of FIG. 4 and FIG. 11 is a view illustrating a modified example of portion B of FIG. 4. Referring to FIGS. 10 and 11, a secondary battery 2 may include a first current collector 600C, a second current collector 700C, a first plate 800C, and a second plate 900C illustrated in FIGS. 10 and 11, instead of the first current collector 600A, the second current collector 700A, the first plate 800A, and the second plate 900A illustrated in FIGS. 3 to 7.

The first plate 800C is located between the first side wall 140 and the electrode assembly 200 in the internal space 101. The first plate 800C may face the first side wall 140 and extend parallel to the longitudinal direction of the first side wall 140. The first plate 800C may include a pair of first tab connecting portions 802 and a first central rib portion 801 between the pair of first tab connecting portions 802. The first plate 800C includes a first current collector connecting portion 825. The first current collector connecting portion 825 is provided on one side of the first plate 800C. For example, the first current collector connecting portion 825 may be provided at an end portion of the first plate 800C in the positive Z-axis direction (+). A thickness of the first current collector connecting portion 825 in the first direction may be greater than a thickness of the first tab connecting portions 802.

The first plate 800C may include a first stepped portion 822 that connects the first tab connecting portion 802 and the first current collector connecting portion 825 in a stepped manner. The first stepped portion 822 may be provided between the first tab connecting portion 802, which is closer to the cap plate 410 among the pair of first tab connecting portions 802, and the first current collector connecting portion 825.

A distance between the first current collector connecting portion 825 and the electrode assembly 200 may be less than a distance between the first tab connecting portion 802 and the electrode assembly 200 in the first direction due to the first stepped portion 822.

The first plate 800C may include a first bending induction notch 830 in the first tab connecting portion 802. The first bending induction notch 830 may be recessed so that a thickness is thinner than the surrounding region and may extend in a width direction of the first tab connecting portion 802.

For example, the first bending induction notch 830 may be recessed in the first direction and extend in the second direction from a surface of the first tab connecting portion 802 facing the electrode assembly 200.

The first bending induction notch 830 may be formed in a region of the first tab connecting portion 802 that does not overlap the first tab 310 and the first tab member 301 of the electrode assembly 200. For example, the cross-sectional geometry of the first bending induction notch 830 may be semicircular or curved.

The first current collector 600C includes a first terminal connecting portion 601 and a first plate connecting portion 650. The first terminal connecting portion 601 is electrically coupled to the first terminal 420. The first plate connecting portion 650 is connected to the first terminal connecting portion 601. The first plate connecting portion 650 includes a first welding surface 651 that is welded to the first current collector connecting portion 825 as a surface facing away from the first sidewall 140.

The first plate connecting portion 650 may include a first stopper surface 653 that blocks the first current collector connecting portion 825 and intersects the first welding surface 651. An end edge of the first current collector connecting portion 825 may be located to face the first stopper surface 653.

A side surface of the first current collector connecting portion 825 welded to the first welding surface 651 may be a side surface facing the first welding surface 651 and facing away from the electrode assembly 200.

The first plate connecting portion 650 may include a first thick portion 660, a first thin portion 662, a first end thick portion 664, a first groove portion 666, and a first through hole 668. A thickness of the first thick portion 660 in the first direction may be greater than a thickness of the first current collector connecting portion 825.

A thickness of the first thin portion 662 in the first direction may be less than the thickness of the first thick portion 660. The first end thick portion 664 may be spaced apart from the first thick portion 660, may be bent at the first thin portion 662, and may protrude toward the first side wall 140. A thickness of the first end thick portion 664 in the first direction may be greater than the thickness of the first thin portion 662.

The first groove portion 666 may be a portion concavely recessed between the first thick portion 660 and the first end thick portion 664 so as to move away from the first side wall 140 in the first direction.

The first through hole 668 may be formed in the first thin portion 662 to pass through the first thin portion 662 in the width direction of the first plate connecting portion 650. The first thin portion 662 may be bent or cut more easily due to the first through hole 668.

When an impact is applied to the case 100 of the secondary battery 2 in the first direction or the third direction, the first welding surface 651 may be separated from the first current collector connecting portion 825 or the first current collector connecting portion 825 and the first tab connecting portion 802 are bent or broken, and thus the first plate 800C may be easily separated from the first plate connecting portion 650 of the first current collector 600C. Accordingly, the first plate connecting portion 650 does not apply a large impact to the electrode assembly 200, and a short circuit between the first current collector 600C and the electrode assembly 200 and the resulting thermal runaway of the secondary battery 2 may be suppressed.

In this case, the first thin portion 662 which has the thinnest thickness among the first thick portion 660, the first thin portion 662, and the first end thick portion 664, may be cut or bent first. Because the first through hole 668 is formed in the first thin portion 662, the first thin portion 662 may be more easily cut or bent.

In addition, depending on a point where an external force is applied to the first current collector 600C and the first plate 800C, a point where the first bending induction notch 830 is formed may be easily broken and cut or bent.

Meanwhile, when an impact is applied to the case 100 of the secondary battery 2 in the third direction, the first plate connecting portion 650 may be plastically deformed to increase or decrease a gap of the first groove portion 666 in the third direction to absorb the impact. Accordingly, the first plate connecting portion 650 does not apply a large impact to the electrode assembly 200, and a short circuit between the first current collector 600C and the electrode assembly 200 and the resulting thermal runaway of the secondary battery 2 may be reliably suppressed.

The second plate 900C is located between the second side wall 150 and the electrode assembly 200 in the internal space 101. The second plate 900C may face the second side wall 150 and extend parallel to the longitudinal direction of the second side wall 150. The second plate 900C may include a pair of second tab connecting portions 902 and a second central rib portion 901 between the pair of second tab connecting portions 902.

The second plate 900C further includes a second current collector connecting portion 925. The second current collector connecting portion 925 is provided on one side of the second plate 900C. For example, the second current collector connecting portion 925 may be provided at an end portion of the second plate 900C in the positive Z-axis direction (+).

The second plate 900C may include a second stepped portion 922 that connects the second tab connecting portion 902 and the second current collector connecting portion 925 in a stepped manner. The second stepped portion 922 may be provided between the second tab connecting portion 902, which is closer to the cap plate 410 among the pair of second tab connecting portions 902, and the second current collector connecting portion 925.

A distance between the second current collector connecting portion 925 and the electrode assembly 200 may be less than a distance between the second tab connecting portion 902 and the electrode assembly 200 in the first direction due to the second stepped portion 922.

The second plate 900C may include a second bending induction notch 930 in the second tab connecting portion 902. The second bending induction notch 930 may be recessed so that a thickness is thinner than the surrounding region and may extend in a width direction of the second tab connecting portion 902.

For example, the second bending induction notch 930 may be recessed in the first direction and extend in the second direction from a surface of the second tab connecting portion 902 facing the electrode assembly 200.

The second bending induction notch 930 may be formed in a region of the second tab connecting portion 902 that does not overlap the second tab 320 and the second tab member 302 of the electrode assembly 200. For example, the cross-sectional shape of the second bending induction notch 930 may be semicircular or curved.

The second current collector 700C includes a second terminal connecting portion 701 and a second plate connecting portion 750. The second terminal connecting portion 701 is electrically coupled to the second terminal 430. The second plate connecting portion 750 is connected to the second terminal connecting portion 701. The second plate connecting portion 750 includes a second welding surface 751 that is welded to the second current collector connecting portion 925 as a surface facing away from the second sidewall 150.

The second plate connecting portion 750 may include a second stopper surface 753 that blocks the second current collector connecting portion 925 and intersects the second welding surface 751. An end edge of the second current collector connecting portion 925 may be located to face the second stopper surface 753.

A side surface of the second current collector connecting portion 925 welded to the second welding surface 751 may be a side surface facing the second welding surface 751 and facing away from the electrode assembly 200.

The second plate connecting portion 750 may include a second thick portion 760, a second thin portion 762, a second end thick portion 764, a second groove portion 766, and a second through hole 768. A thickness of the second thick portion 760 in the first direction may be greater than a thickness of the second current collector connecting portion 925.

A thickness of the second thin portion 762 in the first direction may be smaller than a thickness of the second thick portion 760. The second end thick portion 764 may be spaced apart from the second thick portion 760, may be bent at the second thin portion 762, and may protrude toward the second side wall 150. A thickness of the second end thick portion 764 in the first direction may be greater than the thickness of the second thin portion 762.

The second groove portion 766 may be a portion concavely recessed between the second thick portion 760 and the second end thick portion 764 so as to move away from the second side wall 150 in the first direction.

The second through hole 768 may be formed in the second thin portion 762 to pass through the second thin portion 762 in the width direction of the second plate connecting portion 750. The second thin portion 762 may be bent or cut more easily due to the second through hole 768.

When an impact is applied to the case 100 of the secondary battery 2 in the first direction or the third direction, the second welding surface 751 may be separated from the second current collector connecting portion 925 or the second current collector connecting portion 925 and the second tab connecting portion 902 are bent or broken, and thus the second plate 900C may be easily separated from the second plate connecting portion 750 of the second current collector 700C. Accordingly, the second plate connecting portion 750 does not apply a large impact to the electrode assembly 200, and a short circuit between the second current collector 700C and the electrode assembly 200 and the resulting thermal runaway of the secondary battery 2 may be suppressed.

In this case, the second thin portion 762 which has the thinnest thickness among the second thick portion 760, the second thin portion 762, and the second end thick portion 764, may be cut or bent first. Because the second through hole 768 is formed in the second thin portion 762, the second thin portion 762 may be more easily cut or bent.

In addition, depending on a point where an external force is applied to the second current collector 700C and the second plate 900C, a point where the second bending induction notch 930 is formed may be easily broken and cut or bent.

Meanwhile, when an impact is applied to the case 100 of the secondary battery 2 in the third direction, the second plate connecting portion 750 may be plastically deformed to increase or decrease a gap of the second groove portion 766 in the third direction to absorb the impact. Accordingly, the second plate connecting portion 750 does not apply a large impact to the electrode assembly 200, and a short circuit between the second current collector 700C and the electrode assembly 200 and the resulting thermal runaway of the secondary battery 2 may be reliably suppressed.

When an impact is applied to a case of a secondary battery, a plate that is electrically connected to a tab of an electrode assembly is separated from a current collector, and the current collector does not apply an impact to the electrode assembly. Accordingly, a short circuit between the current collector and the electrode assembly and the resulting thermal runaway of the secondary battery can be suppressed.

## Claims

1. A secondary battery (2) comprising:
a case (100) having one open side, the case (100) comprising a plurality of walls (110, 120, 130, 140, 150) defining an internal space (101);
an electrode assembly (200) accommodated in the internal space (101);
a cap plate (410) configured to close the one open side of the case (100);
a first terminal (420) disposed on the cap plate (410);
a first plate (800A, 800B, 800C) disposed between one of the plurality of walls (110, 120, 130, 140, 150) and the electrode assembly (200) in the internal space (101), the first plate (800A, 800B, 800C) comprising a first current collector connecting portion (807, 815, 825); and
a first current collector (600A, 600B, 600C) comprising a first terminal connecting portion (601) and a first plate connecting portion (610, 630, 650), the first terminal connecting portion (601) electrically coupled to the first terminal (420), the first plate connecting portion (610, 630, 650) electrically connected to the first terminal connecting portion (601) and comprising a first welding surface (611, 631, 651) facing away from the one of the plurality of walls (110, 120, 130, 140, 150), the first welding surface (611, 631, 651) welded to the first current collector connecting portion (807, 815, 825).

2. The secondary battery (2) according to claim 1, wherein the first plate connecting portion (610, 630, 650) further comprises a first stopper surface (613, 633, 653) that blocks the first current collector connecting portion (807, 815, 825) and intersects the first welding surface (611, 631, 651).

3. The secondary battery (2) according to claim 2, wherein the first plate connecting portion (610, 630, 650) further comprises:
a first thick portion (620, 640, 660) including the first stopper surface (613, 633, 653), the first thick portion (620, 640, 660) having a thickness greater than a thickness of the first current collector connecting portion (807, 815, 825); and
a first thin portion (622, 642, 662) including the first welding surface (611, 631, 651), the first thin portion (622, 642, 662) having a thickness less than the thickness of the first thick portion (620, 640, 660).

4. The secondary battery (2) according to claim 3, wherein the first plate connecting portion (630, 650) further comprises a first end thick portion (644, 664) spaced apart from the first thick portion (640, 660), the first end thick portion (644, 664) being bent at the first thin portion (642, 662), the first end thick portion (644, 664) protruding toward the one of the plurality of walls (110, 120, 130, 140, 150).

5. The secondary battery (2) according to any of claims 1 to 4, wherein the first plate (800A, 800B, 800C) further comprises:
a first tab connecting portion (802) electrically connected to a first tab member (301) disposed on one side of the electrode assembly (200); and
a first stepped portion (804, 812, 822) connecting the first tab connecting portion (802) and the first current collector connecting portion (807, 815, 825) in a stepwise configuration.

6. The secondary battery (2) according to claim 5, wherein the first plate (800C) further comprises a first bending induction notch (830) recessed in the first tab connecting portion (802) so that a thickness of the first bending induction notch (830) is less than a thickness of a surrounding region, the first bending induction notch (830) extending in a lateral direction of the first plate (800C).

7. The secondary battery (2) according to claim 6, wherein the first bending induction notch (830) is disposed in a region of the first tab connecting portion (802) that does not overlap a first tab of the electrode assembly (200).

8. The secondary battery (2) according to any of claims 1 to 7, wherein the first terminal (420) is disposed on one side of the cap plate (410), and wherein the secondary battery (2) further comprises:
a second terminal (430) disposed on the other side of the cap plate (410);
a second plate (900A, 900B, 900C) disposed between the electrode assembly (200) and an other of the plurality of walls (110, 120, 130, 140, 150) facing the one of the plurality of walls (110, 120, 130, 140, 150) in the internal space (101), the second plate (900A, 900B, 900C) comprising a second current collector connecting portion (907, 915, 925); and
a second current collector (700A, 700B, 700C) comprising a second terminal connecting portion (701) and a second plate connecting portion (710, 730, 750), the second terminal connecting portion (701) electrically coupled to the second terminal (430), the second plate connecting portion (710, 730, 750)electrically connected to the second terminal connecting portion (701) and comprising a second welding surface (711, 751) facing away from the other of the plurality of walls (110, 120, 130, 140, 150) welded to the second current collector connecting portion (907, 915, 925).

9. The secondary battery (2) according to claim 8, wherein the second plate connecting portion (710, 730, 750) further comprises a second stopper surface (713, 733, 753) that blocks the second current collector connecting portion (907, 915, 925) and intersects the second welding surface (711, 751).

10. The secondary battery (2) according to claim 9, wherein the second plate connecting portion (710, 730, 750) further comprises:
a second thick portion (720, 740, 760) including the second stopper surface (713, 733, 753), the second thick portion (720, 740, 760) having a thickness greater than a thickness of the second current collector connecting portion (907, 915, 925); and
a second thin portion (722, 742, 762) including the second welding surface (711, 751), the second thin portion (722, 742, 762) having a thickness less than the thickness of the second thick portion (720, 740, 760).

11. The secondary battery (2) according to claim 10, wherein the second plate connecting portion (730, 750) further comprises a second end thick portion (744, 764) spaced apart from the second thick portion (740, 760), the second end thick portion (744, 764) being bent at the second thin portion (742, 762), the second end thick portion (744, 764) protruding toward the other of the plurality of walls (110, 120, 130, 140, 150).

12. The secondary battery (2) according to any of claims 8 to 11, wherein the second plate (900A, 900B, 900C) further comprises:
a second tab connecting portion (902) electrically connected to a second tab member (302) disposed on the other side of the electrode assembly (200); and
a second stepped portion (904, 922, 942) connecting the second tab connecting portion (902) and the second current collector connecting portion (907, 915, 925) in a stepwise configuration.

13. The secondary battery (2) according to claim 12, wherein the second plate (900C) further comprises a second bending induction notch (930) recessed in the second tab connecting portion (902) so that a thickness of the second bending induction notch (930) is less than a thickness of a surrounding region, the second bending induction notch (930) extending in a lateral direction of the second plate (900C).

14. The secondary battery (2) according to claim 13, wherein the second bending induction notch (930) is disposed in a region of the second tab connecting portion (902) that does not overlap a second tab of the electrode assembly (200).

15. A battery pack (1) comprising:
a housing; and
a plurality of secondary batteries (2) disposed inside the housing,
wherein each of the secondary batteries (2) comprises:
a case (100) having one open side , the case (100) comprising a plurality of walls (110, 120, 130, 140, 150) defining an internal space (101);
an electrode assembly (200) accommodated in the internal space (101);
a cap plate (410) configured to close the one open side of the case (100);
a first terminal (420) disposed on the cap plate (410);
a first plate (800A, 800B, 800C) disposed between one of the plurality of walls (110, 120, 130, 140, 150) and the electrode assembly (200) in the internal space (101), the first plate (800A, 800B, 800C) comprising a first current collector connecting portion (807, 815, 825); and
a first current collector (600A, 600B, 600C) comprising a first terminal connecting portion (601) and a first plate connecting portion (610, 630, 650), the first terminal connecting portion (601) electrically coupled to the first terminal (420), the first plate connecting portion (610, 630, 650) electrically connected to the first terminal connecting portion (601) and comprising a first welding surface (611, 631, 651) facing away from the one of the plurality of walls (110, 120, 130, 140, 150), the first welding surface (611, 631, 651) welded to the first current collector connecting portion (807, 815, 825).
